# EUROPÄISCHE PATENTSCHRIFT

(11) **EP 0 509 342 B1**
(45) Veröffentlichungstag und Bekanntmachung des Hinweises auf die Patenterteilung: **17.01.1996**
(21) Anmeldenummer: 92105756.8
(22) Anmeldetag: 03.04.1992
(51) Int. Cl.: B23K 15/08

(54) **Verfahren zur Herstellung keilförmiger Strukturen**
Manufacturing process for wedge shaped structures
Procédé de fabrication de structures en forme de coin

(30) Priorität: 11.04.1991 DE 4111783
(43) Veröffentlichungstag der Anmeldung: 21.10.1992
(73) Patentinhaber: ANT Nachrichtentechnik GmbH, D-71522 Backnang (DE)
(72) Erfinder: Schwander, Thomas, Dipl.-Ing., W-7150 Backnang (DE)

(56) Entgegenhaltungen:
- EP-A- 0 391 539
- DE-A- 2 416 029
- US-A- 4 940 881
- DATABASE WPI Section Ch, Week 7843, Derwent Publications Ltd., London, GB; Class L03, AN 78-77004A & JP-A-53 106 151 (NIPPON ELECTRIC KK) 14 September 1978
- LASERS AND ELECTRO-OPTICS SOCIETY ANUAL MEETING CONFERENCE PROCEEDINGS. 20 October 1989, ORLANDO, FA, USA pages 185-188, XP131055 M.N. RUBERTO "The Maskless Photochemical Etchinf of Optical Components on GaAs/A1GaAs Heterostructures"
- APPLIED PHYSICS LETTERS vol. 56, no. 12, 19 March 1990, NEW YORK, US pages 1098 - 1100 , XP133476 A. SHAHAR 'Dynamic etch mask technique for fabricating tapered semiconductor optical waveguides and other structures'

## Beschreibung

Die Erfindung betrifft ein Verfahren zur Herstellung keilförmiger Strukturen, beispielsweise für Lichtwellenleiter-Taper, bei dem eine Blende über ein Substrat geführt wird.

Bei optoelektronischen Schaltungen ist oftmals eine Feldanpassung zwischen Lichtwellenleitern mit elliptischer Feldverteilung und Glasfasern erforderlich. Da abrupte Änderungen der Abmessungen von Lichtwellenleitern zu Streuung und Reflektion führen, sind sehr flache gleichmäßige ("adiabatische")Übergänge von starker auf schwache Wellenführung notwendig.

Aus der DD 251 212 A1 ist ein Verfahren zur Herstellung von Wellenleitern für Stirnflächeneinkopplung bekannt. Bei dem angegebenen Verfahren wird zur Erzeugung einer definierten Dicke in einer Taper-Region eine Blende mit einer bestimmten ungleichförmigen Geschwindigkeit über ein Substrat geführt. Dies erfolgt während eine Titanschicht aufgebracht wird. Die Titanschicht wird danach in das Substrat eindiffundiert. Aus der angegebenen Schrift ist es auch bekannt, daß die Titanschicht gleichmäßig auf das Substrat aufgebracht wird und anschließend unter bestimmten Bedingungen eindiffundiert und die Blende während eines Sputterprozesses von der Stirnfläche der Einkopplung der Einmodenstrahlung über das Substrat geführt wird.

Das bekannte Verfahren wirkt gleichmäßig auf die prozessierte Probe, es entsteht also nur ein Taper an einer Probeseite. Für viele Anwendungen ist es jedoch erforderlich, auf einem Substrat mehrere Lichtwellenleiter-Taper vorzusehen.

Aus M.N. Ruberto et al. "The Maskless Photochemical Etching of Optical Components on GaAs/AlGaAs Heterostructures", Lasers and Electro-Optic Society Annual Meeting Conference Proceedings, 17.-20.10.1989, Seite 185 bis 188 ist ein Verfahren zur Herstellung einer keilförmigen Struktur bekannt, insbesondere für einen Lichtwellenleiter-Taper, wobei das Substrat während einem Bearbeitungsvorgang zum Ätzen bestrahlt wird und wobei die Bestrahlung durch Bewegen des Substrats oder durch Bewegen der Strahlquelle so vorgenommen wird, daß die Einwirkzeit pro Fläche und/oder die Strahlintensität pro Fläche zwischen zwei entgegengesetzten Enden der herzustellenden Struktur während dem Bearbeitungsvorgang zu- oder abnimmt. Die Ätztiefe wird kontrolliert durch eine Variation der Laserintensität oder durch die Geschwindigkeit der Bewegung.

Ein Verfahren, mit dem auf einem Substrat mehrere keilförmige Strukturen hergestellt werden können, ist aus Patent Abstracts of Japan, C-638, Sept. 20, 1989, Vol. 13, No. 423 (= J- 1-162 783 A) bekannt. Auf einer Schichtenfolge aus Silber, Aluminium und Stahl wird eine Maske aufgebracht. Zunächst wird das Substrat dann einer Ionenstrahlung unter einem schrägen Einfallswinkel und dann einer Ionenstrahlung unter senkrechtem Einfallswinkel zum Ätzen ausgesetzt.

Es ist Aufgabe der Erfindung, ein weiteres Verfahren anzugeben, mit dem die Herstellung mehrerer Lichtwellenleiter-Taper auf einem Substrat möglich ist.

Eine Lösung der Aufgabe ist im Patentanspruch 1 angegeben. Vorteilhafte Weiterbildungen sind den Unteransprüchen zu entnehmen.

Eine Art der Herstellung von flachen keilförmigen Strukturen wird in der angegebenen Erfindung beschrieben. Es kommt dabei darauf an, daß ein Bearbeitungsvorgang durch Bestrahlen vorgesehen ist, z.B. Ätzen mit einem Ionenstrahl oder Beschichten oder Abtragen, bei dem die Einwirkzeit pro Fläche zwischen zwei entgegengesetzten Enden jeder herzustellenden Struktur während dem Bearbeitungsvorgang zu- oder abnimmt. Es wird dabei mit einem großflächig einwirkenden Strahl und bewegter Blende und ortsfester Maske gearbeitet.

Nach der erfindungsgemäßen Lösung mit einem großflächig einwirkenden Strahl wird sowohl mit einer Blende als auch mit Maske gearbeitet. Die Maske wird dabei bezüglich dem Substrat ortsfest angebracht. Sie kann aus einer scheibenähnlichen Struktur mit Öffnungen bestehen, es ist aber besonders einfach die Maske direkt auf dem Substrat aufzubringen. Eine solche Maske kann beispielsweise aus Photolack oder Titan oder aus Siliziumoxyd bestehen. Die Maske weist für jede keilförmige Struktur, die man herstellen will, eine Öffnung auf. Weitere Aussparungen in der Maske zum Herstellen von ebenen Strukturen sind möglich. Während die Maske ortsfest über dem Substrat angebracht wird, wird die Blende über das Substrat bewegt. Die Bewegung der Blende kann beispielsweise mit einer konstanten Geschwindigkeit erfolgen, was eine besonders einfache Ausgestaltung der notwendigen Vorrichtungen ermöglicht. Eine besonders einfache Ausgestaltung ergibt sich auch dann, wenn ein ortsfester Rahmen vorgesehen ist, in dem sich ein oder mehrere Schieber bewegen lassen, die die eigentliche bewegliche Blende darstellen. Die Blende wird während einem Bearbeitungsvorgang, beispielsweise einem Trockenätzvorgang oder einem Bedampfungsvorgang über dem Substrat bewegt. Die Bewegung kann entweder direkt über der Maske, die sich auf dem Substrat befindet, durchgeführt werden, es ist aber auch möglich, die Blende über dem Substrat und die Maske über der Blende anzubringen. Die Blende muß derart geführt werden, daß die Teile des Substrats, die unter einer Öffnung einer Maske liegen und somit dem Bearbeitungsvorgang ausgesetzt werden können, an entgegengesetzten Enden dem Bearbeitungsvorgang unterschiedlich lange ausgesetzt sind. So entsteht unter einer Öffnung bei einem Ätzvorgang eine keilförmig geätzte Vertiefung oder bei einem Bedampfungsvorgang eine auf das Substrat aufgebrachte keilförmige Schicht. Die aufgedampfte Schicht kann dann unter nochmaligem Einsatz der Maske weggeätzt werden. Da die aufgedampfte Schicht keilförmig ist bedeutet dies, daß auch in das Substrat eine keilförmige Vertiefung geätzt wird. Eine besonders einfache Ausbildung des Verfahrens wird erreicht, wenn die Blende und die Maske bezüglich der Öffnungen deckungsgleich sind. Dadurch wird es möglich Blende und Maske in einem Arbeitsgang herzustellen. Die Maske kann aber auch die herzustellende Struktur, beispielsweise den Rippenwellenleiter enthalten, während die Blende großflächig ausgebildet ist. Ein Bearbeitungsvorgang mit bewegter Blende kann dann beispielsweise so aussehen, daß die Blende zu Beginn des Arbeitsvorganges so liegt, daß das Substrat an sämtlichen Öffnungen der Maske durch die Blende verdeckt ist und am Ende des Bearbeitungsvorganges die Öffnungen in der Maske und die Aussparungen in der Blende übereinanderliegen und das Substrat durch die Öffnungen bearbeitbar ist. Durch eine Bewegung der Blende mit unterschiedlichen Geschwindigkeiten ist es möglich unterschiedliche Steigungen der geneigten Fläche der keilförmigen Vertiefungen oder keilförmigen aufgedampften Strukturen zu erhalten. Ist die Öffnung der Blende kleiner als die Öffnung in der Maske, erhält man einen Übergang von einer ebenen zu einer geneigten Fläche.

Wenn die Blende einen ortsfesten Rahmen aufweist, ist es besonders einfach die auf dem Substrat auch erforderlichen ebenen Flächen herzustellen. Dies kann beispielsweise erfolgen indem die Blende schon teilweise geöffnet ist, wenn der Bearbeitungsvorgang beginnt, und während des Bearbeitungsvorgangs ganz geöffnet wird. So entsteht eine ebene Struktur mit sich daran anschließender keilförmiger Struktur. Die Maske muß eine Öffnung für die keilförmige Struktur und eine sich davon anschließende Aussparung für eine ebene Struktur aufweisen.

Ausführungsbeispiele der Erfindung werden anhand der Figuren 1 bis 5 erläutert. Es zeigen:
Figur 1 den grundsätzlichen Aufbau zur Durchführung eines erfindungsgemäßen Verfahrens,
Figur 2 ein Substrat mit keilförmigen geätzten Strukturen,
Figur 3 eine Vergrößerung aus Figur 2,
Figur 4 ein Substrat mit aufgedampften keilförmigen Strukturen und
Figur 5 einen Lichtwellenleiter-Taper mit horizontaler und vertikaler keilförmiger Struktur.

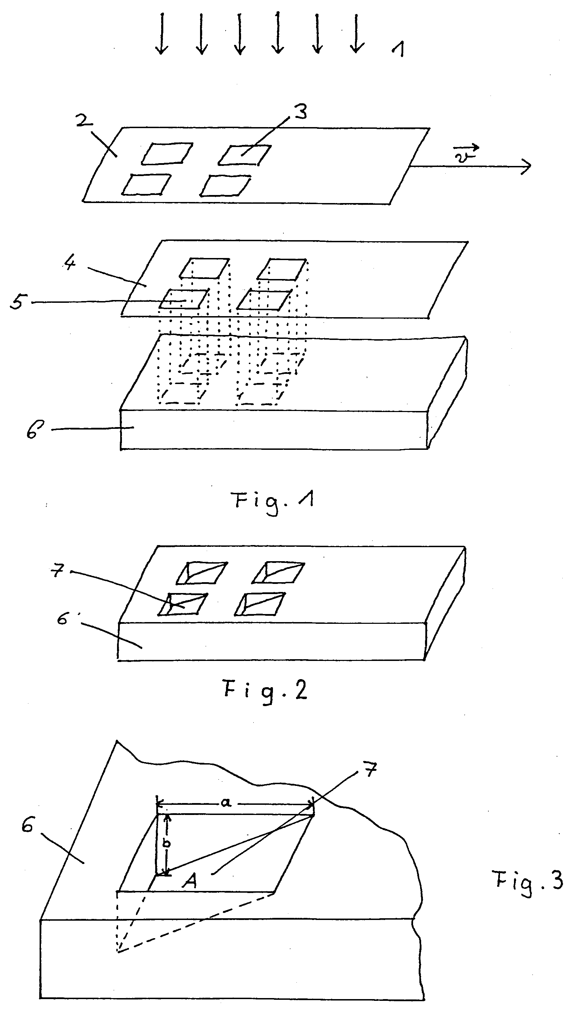

Figur 1 zeigt ein Substrat 6, das mit einem Ionenstrahl 1 zum Trockenätzen großflächig bearbeitet wird. Zwischen dem Ionenstrahl 1 und dem Substrat 6 befindet sich eine Blende 2, die Aussparungen 3 aufweist und mit einer Geschwindigkeit v über dem Substrat bewegt wird. Zwischen der Blende 2 und dem Substrat 6 befindet sich desweiteren eine Maske 4, die Öffnungen 5 aufweist. Im Gegensatz zur schematischen Darstellung gemäß Figur 1 sind die Abstände zwischen Blende, Maske und Substrat gering. Die Maske 4 wird bezüglich dem Substrat 6 nicht bewegt. Die Blende 2 ist deckungsgleich zur Maske 4 gearbeitet. In Substrat 6 sollen vier Lichtwellenleiter-Taper gearbeitet werden. Die Maske 4 und die Blende 2 weisen also vier Öffnungen auf, die den Randabmessungen des Lichtwellenleiter-Tapers entsprechen. Zu Beginn des Bearbeitungsvorganges mit den Ionenstrahl sind die Aussparungen 3 gegenüber den Öffnungen 5 so angeordnet, daß der Ionenstrahl das Substrat 6 nicht trifft. Durch Verschieben der Blende 2 wird allmählich ein immer größer werdender Teil des Substrats 6 vom Ionenstrahl bearbeitet. Die Bearbeitung ist beendet, wenn die Aussparungen 3 der Blende 2 und die Öffnungen 5 der Maske 4 zur Deckung kommen. Es sind geätzte keilförmige Vertiefungen 7 entstanden, wie in Figur 2 dargestellt sind. Eine Vergrößerung einer solchen geätzten keilförmigen Vertiefung 7 ist aus Figur 3 ersichtlich. Zu den Abmessungen einer solchen keilförmigen Struktur ist zu sagen, daß ihre Länge a sehr viel größer ist als ihre Dicke b.

### Beispiel:

Länge des Lichtwellenleiter-Tapers a > 100 µm und maximale Dicke des Lichtwellenleiter-Tapers b < 1 µm. Durch entsprechende Dimensionierung der Maske 4 ist die Herstellung von keilförmigen Strukturen an verschiedenen Stellen des Substrats möglich. Durch die Wahl verschiedener Geschwindigkeitsprofile bei der Bewegung der Blende 2 lassen sich beliebige Formen der Lichtwellenleiter-Taper realisieren. Insbesondere ist durch Variation der Geschwindigkeit die Steigung der Fläche A veränderbar. Nachdem eine geätzte keilförmige Vertiefung 7 nach dem erfindungsgemäßen Verfahren hergestellt ist, kann der Lichtwellenleiter-Taper hergestellt werden, indem die Vertiefung mit einem optischen wirksamen Material geringfügig höherer Brechzahl als das Substrat besitzt zugewachsen wird.

Neben der eben beschriebenen Lösung, daß das Trockenätzen mit dem Ionenstrahl direkt bei Bewegung der Blende über der Maske durchgeführt wird, ist es beispielsweise möglich, daß zunächst eine Schicht auf das Substrat 6 aufgedampft wird. Der Aufbau und das Verfahren entspricht weiterhin dem in Figur 1 dargestellten, jedoch wird ein Materiestrahl 1 zum Aufdampfen durch Blende und Maske auf das Substrat aufgebracht. Es entsteht dann eine in Figur 4 dargestellt Struktur, die auf dem Substrat 6 aufgedampfte keilförmige Strukturen 8 aufweist. Diese Strukturen sind an den Stellen entstanden, an denen später die Lichtwellenleiter-Taper vorgesehen sind. Mit dem in Figur 4 dargestellten Substrat 6 mit den aufgedampften Strukturen 8 wird nun wie folgt weiterverfahren. Die Maske verbleibt weiterhin über dem Substrat 6. Dann wird das Substrat mit der Maske einem Ätzvorgang ausgesetzt. Durch die auf dem Substrat aufgedampften Strukturen Wird das Substrat unter den Öffnungen der Maske nicht gleichmäßig geätzt, sondern es entstehen ebenfalls keilförmige Strukturen. Diese sehen den in Figur 2 dargestellten keilförmigen geätzten Vertiefungen 7 sehr ähnlich, sind aber in entgegengesetzter Richtung geneigt. Der Neigungswinkel der Vertiefungen ist nicht nur abhängig von der Geschwindigkeit mit der die Blende über das Substrat über das Aufdampfen bewegt wird, also von der Neigung der aufgedampften keilförmigen Strukturen 8, sondern auch von der Ätzrate des aufgedampften Materials. Stimmen die Ätzrate vom aufgedampften Material und vom Substrat überein, so stimmen auch die Neigungswinkel der aufgedampften keilförmigen Struktur 8 und der geätzten keilförmigen Vertiefung überein. Durch unterschiedliche Ätzraten entstehen unterschiedliche Neigungswinkel.

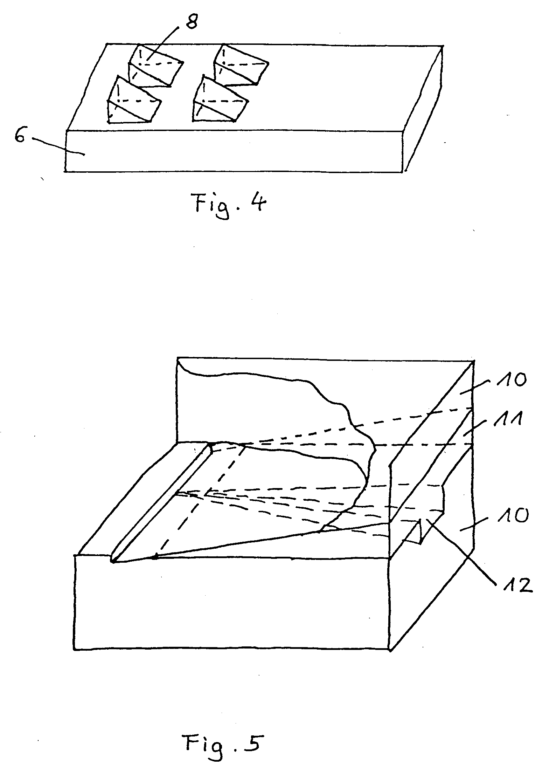

In Figur 5 ist ein Beispiel eines Lichtwellenleiter-Tapers 12 dargestellt. Dieser ist in Form eines invertierten Rippenwellenleiters ausgeführt. Das Substrat besteht aus InP 10 während der Lichtwellenleiter aus InGaAsP 11 besteht. Der Lichtwellenleiter-Taper ist sowohl in horizontaler als auch in vertikaler Richtung keilförmig ausgebildet. Die Strukturierung in horizontaler Richtung erfolgt durch entsprechende Ausbildung der Öffnungen in der Maske. Die über dem eigentlichen Wellenleiter aufgebrachte keilförmige Streifenleiterstruktur kann durch Bewegen einer großflächigen Blende, wie es bereits aus dem Stand der Technik bekannt ist, hergestellt werden oder mehrfach auf einem Substrat durch das beschriebene Verfahren.

## Patentansprüche

1. Verfahren zur Herstellung von keilförmigen Strukturen, insbesondere für Lichtwellenleiter-Taper, auf einem Substrat, wobei das Substrat (6) während eines Bearbeitungsvorganges zum Abtragen, Ätzen oder Beschichten bestrahlt wird, und wobei während der Bestrahlung zwischen Stahlquelle und Substrat eine ortsfeste Maske (4) eingesetzt wird, die für jede keilförmige Struktur eine Öffnung (5) aufweist, dadurch gekennzeichnet, daß die Bestrahlung durch Bewegen einer Blende (2) zwischen Strahlquelle und Substrat (6) so vorgenommen wird, daß die Einwirkzeit pro Fläche zwischen zwei entgegengesetzten Enden jeder herzustellenden Struktur während des Bearbeitungsvorganges zu- oder abnimmt.

2. Verfahren nach Anspruch 1, dadurch gekennzeichnet, daß die bezüglich des Substrats (6) ortsfeste Maske (4) über dem Substrat (6) eingesetzt wird und daß die Blende (2) über oder unter der Maske (4) bewegt wird, derart, daß für das Substrat (6) unter allen Öffnungen (5) gilt, daß zwei entgegengesetzte Enden jeder herzustellenden Struktur einem Bearbeitungsvorgang unterschiedlich lange ausgesetzt sind.

3. Verfahren nach Anspruch 2, dadurch gekennzeichnet, daß die Blende (2) während des großflächigen Bestrahlens des Substrates (6) mit einem Ionenstrahl (1) zum Trockenätzen über das Substrat (6) geführt wird.

4. Verfahren nach Anspruch 3, dadurch gekennzeichnet, daß die Blende (2) während des Aufbringens einer Schicht über das Substrat (6) bewegt wird.

5. Verfahren nach Anspruch 4, dadurch gekennzeichnet, daß die aufgebrachte Schicht in das Substrat (6) diffundiert wird.

6. Verfahren nach Anspruch 4, dadurch gekennzeichnet, daß die aufgebrachte Schicht und das darunterliegende Substrat unter Einsatz der ortsfesten Maske einem Ätzvorgang auzgesetzt wird.

7. Verfahren nach einem der Ansprüche 1 bis 6, dadurch gekennzeichnet, daß eine direkt auf dem Substrat (6) aufgebrachte Schicht aus Photolack als Maske (4) eingesetzt wird.

8. Verfahren nach einem der Ansprüche 1 bis 7, dadurch gekennzeichnet, daß eine Blende (2) eingesetzt wird, die deckungsgleich zur Maske (4) ist.

9. Verfahren nach einem der Ansprüche 1 bis 8, dadurch gekennzeichnet, daß die Blende (2) zu Beginn des Bearbeitungsvorganges So positioniert wird, daß das Substrat (6) an sämtlichen Öffnungen (5) der Maske (4) durch die Blende (2) verdeckt ist und am Ende dem Bearbeitungsvorganges so positioniert wird, daß das Substrat (6) durch die Öffnungen (5) bearbeitbar ist, oder umgekehrt.

10. Verfahren nach einem der Ansprüche 1 bis 9, dadurch gekennzeichnet, daß die Blende (2) mit konstanter Geschwindigkeit bewegt wird.

## Claims

1. Method for producing wedge-shaped structures, in particular for optical fibre tapers, on a substrate, the substrate (6) being irradiated during a treatment process for erosion, etching or coating, and a positionally fixed mask (4), which has an opening (5) for each wedge-shaped structure, being inserted between the radiation source and the substrate during the irradiation, characterized in that the irradiation is carried out by moving a diaphragm (2) between the radiation source and the substrate (6) in such a way that the exposure time per unit surface area between two opposite ends of each structure to be produced increases or decreases during the treatment process.

2. Method according to Claim 1, characterized in that the mask (4) which is positionally fixed relative to the substrate (6) is inserted above the substrate (6) and in that the diaphragm (2) is moved above or below the mask (4), in such a way that the effect of two opposite ends of each structure to be produced being exposed to one treatment process for different periods of time is obtained for the substrate (6) under all the openings (5).

3. Method according to Claim 2, characterized in that the diaphragm (2) is guided over the substrate (6) during the large-area irradiation of the substrate (6) with an ion beam (1) for dry etching.

4. Method according to Claim 3, characterized in that the diaphragm (2) is moved during application of a layer over the substrate (6).

5. Method according to Claim 4, characterized in that the applied layer is diffused into the substrate (6).

6. Method according to Claim 4, characterized in that the applied layer and the underlying substrate are exposed to an etching process with insertion of the positionally fixed mask.

7. Method according to one of Claims 1 to 6, characterized in that a layer of photoresist applied directly onto the substrate (6) is used as the mask (4).

8. Method according to one of Claims 1 to 7, characterized in that a diaphragm (2) which is congruent with the mask (4) is used.

9. Method according to one of Claims 1 to 8, characterized in that the diaphragm (2) is positioned at the start of the treatment process in such a way that the substrate (6) is covered at all openings (5) in the mask (4) by the diaphragm (2) and, at the end of the treatment process, is positioned in such a way that the substrate (6) can be processed through the openings (5), or vice versa.

10. Method according to one of Claims 1 to 9, characterized in that the diaphragm (2) is moved at constant speed.

## Revendications

1. Procédé de fabrication de structures en forme de coin, en particulier pour des pointes de guides d'ondes lumineuses, sur un substrat, dans lequel le substrat (6), pendant un processus de traitement, est soumis à un rayonnement servant à enlever de la matière, à graver ou à enduire et dans lequel pendant le rayonnement, on insère entre la source de rayonnement et le substrat un masque à poste fixe (4), qui présente pour chaque structure en forme de coin, une ouverture (5), procédé caractérisé en ce que le rayonnement est réalisé en déplaçant un écran (2) entre la source de rayonnement et le substrat (6) de telle façon que le temps d'action par surface entre deux extrémités opposées de chaque structure à réaliser croisse ou décroisse pendant le processus de traitement.

2. Procédé selon la revendication 1, caractérisé en ce que le masque (4) à poste fixe par rapport au substrat (6) est mis au-dessus du substrat (6) et en ce que l'écran (Z) est déplacé au-dessus ou en dessous du masque (4) de telle façon que pour le substrat (6), il arrive sous toutes les ouvertures (5) que deux extrémités opposées de chaque structure à réaliser soient exposées à un processus de traitement pendant un temps différemment long.

3. Procédé selon la revendication 2, caractérisé en ce que l'on fait passer l'écran (2) pendant l'exposition du substrat (6) au rayonnement sur une grande surface par un rayonnement ionisant (I) au-dessus du substrat (6) pour une gravure à sec.

4. Procédé selon la revendication 3, caractérisé en ce que l'écran (2) est déplacé au-dessus du substrat (6) pendant le dépôt d'une couche.

5. Procédé selon la revendication 4, caractérisé en ce qu'on fait diffuser la couche déposée dans le substrat (6).

6. Procédé selon la revendication 4, caractérisé en ce que la couche déposée et le substrat qui se trouve en dessous sont soumis en utilisant le masque à poste fixe à un processus de gravure.

7. Procédé selon l'une des revendications 1 à 6, caractérisé en ce que l'on utilise une couche de photoresiste directement déposée sur le substrat (6) comme masque (4).

8. Procédé selon l'une des revendications 1 à 7, caractérisé en ce que l'on utilise un masque (2) qui est mis en coïncidence de recouvrement avec le masque (4).

9. Procédé selon l'une des revendications 1 à 8, caractérisé en ce que le masque (2) est positionné au début du processus de traitement d'une manière telle que le substrat (6) soit recouvert sur l'ensemble des ouvertures (5) du masque (4) par l'écran (2) et à la fin du processus de traitement soit positionné de telle façon que le substrat (6) puisse être traité à travers les ouvertures (5), ou inversement.

10. Procédé selon l'une des revendications 1 à 9, caractérisé en ce que l'écran (2) est déplacé à vitesse constante.
